# EUROPEAN PATENT SPECIFICATION

(11) **EP 4 078 854 B1**
(45) Date of publication and mention of the grant of the patent: **04.03.2026**
(21) Application number: 20901267.3
(22) Date of filing: 11.12.2020
(51) Int. Cl.: H04B 10/25, G02B 6/02, H01S 3/094, H04B 10/2575, H04B 10/291, H04J 14/02, H01S 3/067, H01S 3/16

(54) **AMPLIFIED HOLLOW CORE FIBER TRANSMISSION**
VERSTÄRKTE HOHLKERN-FASERÜBERTRAGUNG
TRANSMISSION PAR FIBRE À ÂME CREUSE AMPLIFIÉE

(30) Priority: 18.12.2019 US 201962949704 P
(43) Date of publication of application: 26.10.2022
(73) Proprietor: OFS FITEL LLC, Norcross, GA 30071 (US)
(72) Inventor: MANGAN, Brian, Hopewell, NJ 08525 (US); DIGIOVANNI, David, J., Mountain Lakes, NJ 07046 (US); ZHU, Benyuan, Princeton, NJ 08540 (US)
(74) Representative: Stöckeler, Ferdinand
(86) International application number: PCT/US2020/064417
(87) International publication number: WO 2021/126674

(56) References cited:
- CA-C- 2 581 654
- CN-U- 204 761 441
- CN-U- 208 508 948
- US-A1- 2001 019 448
- US-A1- 2001 019 448
- US-A1- 2004 202 437
- US-A1- 2005 105 867
- US-A1- 2011 007 385
- US-A1- 2012 219 301
- US-A1- 2012 219 301
- US-A1- 2019 356 106
- US-B2- 8 081 855

## Description

### CROSS REFERENCE TO RELATED APPLICATIONS

This application claims the benefit of U.S. provisional patent application serial number 62949704, filed 2019-DEC-18, having the title "Long-Length, Low-Latency, Amplified Hollow Core Fiber Transmission," by DiGiovanni et al.

### BACKGROUND

### FIELD OF THE DISCLOSURE

The present disclosure relates generally to fiber optics and, more particularly, to amplified hollow core fiber (HCF) transmissions.

### DESCRIPTION OF RELATED ART

Signal transmission through optical fibers experiences attenuation over the length of the transmission line. Because of the signal impairment that results from the attenuation, there are ongoing efforts to improve optical signal-to-noise ratio (OSNR) in optical transmission lines.
Document CN 208 508 948 U relates to the field of optical communication technology, and in particular to a single-span optical transmission system.
Document US 2012/219301 Al relates to a low-latency fiber based communication system that utilizes hollow core fiber.
Document CA 2 581 654 C relates to remote optically-pumped erbium-doped fiber amplifiers, as are used in submarine fiber optic spans and long distance spans over land.

### SUMMARY

The present disclosure teaches an amplified hollow-core fiber (HCF) optical transmission system for low latency communications. In one embodiment, the transmission system comprises a first hollow-core fiber, HCF cable comprising: a first HCF sheathed in the first HCF cable, the first HCF for carrying an optical transmission signal;
and a solid-core optical fiber sheathed together with the first HCF in the first HCF cable, the solid-core optical fiber for carrying pump light from a remote optical pump source; a remote optically pumped amplifier, ROPA located in the first HCF cable, the ROPA comprising: an Erbium/Er doped fiber, EDF sheathed together with the first HCF and the solid-core optical fiber in the first HCF cable, the EDF having a length of less than 1.5 meters, the EDF for receiving the optical transmission signal from the first HCF, the EDF further for amplifying the optical transmission signal to an amplified transmission signal; a wavelength division multiplexing, WDM coupler optically coupled to the solid-core optical fiber, the WDM coupler further being optically coupled to the EDF, the WDM coupler for combining the pump light with the optical transmission signal; and an optical isolator for conveying the amplified transmission signal from the EDF; and a second HCF cable optically coupled to the ROPA, the second HCF comprising: a second HCF located in the second HCF cable, the second HCF being optically coupled to the optical isolator, the second HCF for carrying the amplified transmission signal.

Other systems, devices, methods, features, and advantages will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1A is a diagram showing one embodiment of a remote optically pumped amplifier (ROPA) system comprising a co-pumped gain optical fiber.
FIG. 1B is a diagram showing one embodiment of a ROPA system comprising a counter-pumped gain fiber.
FIG. 1C is a diagram showing one embodiment of a ROPA system showing both co-pumping and counter-pumping of a gain fiber.
FIG. 2 is a diagram showing one embodiment of an optical transmission system with multiple ROPAs to amplify optical transmission signals at different segments between a transmitter terminal and a receiver terminal.
FIG. 3 is a graph showing one example of total optical signal power corresponding to each segment of the transmission system in FIG. 2.

### DETAILED DESCRIPTION OF THE EMBODIMENTS

Signal transmission through optical fibers experiences attenuation over the length of the transmission line. Because of the signal impairment that results from the attenuation, there are ongoing efforts to improve optical signal-to-noise ratio (OSNR) in optical transmission lines. Attenuation is especially problematic for signal transmission in hollow-core fibers (HCFs) for low-latency applications, which are limited by high attenuation and require high signal-to-noise ratios (SNRs). This is because conventional remedies for signal attenuation often degrade latency.

To improve OSNR without significantly affecting latency, the present disclosure provides remote optically pumped amplifiers (ROPAs) that extend the reach of HCF segments, thereby allowing for cascaded amplification throughout the transmission link. For low-latency applications, a primary objective is to minimize or reduce extra fiber lengths, such as in fiber pigtails.

To reduce fiber lengths, for some embodiments, the gain fiber in each ROPA is less than approximately one meter (~1m) in length and is located in the HCF cable. Of course, for these embodiments, the optical components that accompany the gain fiber (e.g., wavelength division multiplexing (WDM) coupler, optical isolator, etc.) are integrated into a single package with the gain fiber, thereby further reducing extra pigtail fibers. The reduced lengths of the gain fibers produce a suitable gain (e.g., approximately twenty decibels (~20dB) to ~30dB) with a total non-HCF length of less than approximately one meter (< ~1m) to ~2m. For other embodiments, it should be appreciated that the ROPA need not be located in the HCF cable itself but in close proximity to the cable (close enough to minimize or reduce the non-HCF length). To be clear, the ROPA being located in the HCF cable itself means that, either, the ROPA is connected to the HCF and the solid-core optical fibers before the final cable is manufactured and therefore the ROPA, HCF, and solid-core optical fibers are sheathed together in the cable, or, alternatively, the ROPA is contained in a small pod that is attached to the HCF cable (similar to how inline amplifiers for undersea systems are constructed).

Continuing, although the gain fiber is located in the HCF cable, the pump source is located remotely (e.g., at either a transmitter terminal, a receiver terminal, or both), with the pump light being provided to the gain fiber through a solid-core optical fiber that is cabled together with the HCF. The remote placement of the pump source permits power supplies (and other electrical components) to be located remotely. This allows for amplification in the HCF cable without requiring cumbersome and expensive components to be co-located with the gain fiber. The close proximity of the gain fiber to the HCFs results in low latency. Furthermore, because HCFs exhibit very low optical nonlinearity, input signal power to the HCFs can be as high as approximately one Watt (~1W), ~10W, or more.

Having provided a broad technical solution to a technical problem, reference is now made in detail to the description of the embodiments as illustrated in the drawings.

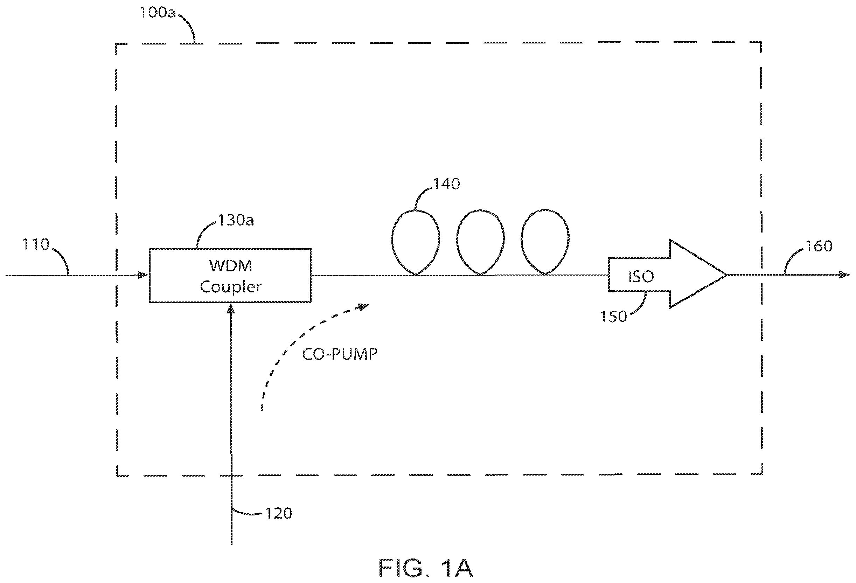

FIG. 1A is a diagram showing one embodiment of a ROPA system 100a for delivering a high output signal power and having a co-pumping configuration. In architecture, the ROPA system 100a comprises an input from a HCF 110, a solid-core optical fiber 120, a wavelength division multiplexing (WDM) coupler 130a, a gain fiber 140, an optical isolator 150, and an output to another HCF 160. For purposes of illustration, the HCF 110 carries an optical signal over a length that exceeds approximately four kilometers (~4km) and, thus, both the HCF 110 and the solid-core optical fiber 120 have lengths that exceed ~4km.

In operation, the input HCF 110 carries the optical transmission signal to the ROPA system 100a, while the solid-core optical fiber 120 carries pump light to the ROPA system 100a from a remote optical pump source (not shown in FIG. 1A). For some embodiments, the HCF 110 and the solid-core optical fiber 120 are cabled together. In other words, a single cable houses both the HCF 110 and the solid-core optical fiber 120. For other embodiments, the solid-core fiber can be in a separate cable adjacent to the HCF cable. In other embodiments, the pump light can be transmitted through the HCF along with the optical transmission signal. For illustrative embodiments, the center wavelength (λ) of the optical transmission signal is approximately 1550 nanometers (~1550nm), or C-Band, which is often used for dense wavelength division multiplexing (DWDM), and the λ for the pump light is ~1485nm (±~5nm). The solid-core optical fiber delivers pump power on the order of ~1W, ~10W, or higher. It should be appreciated that, for some embodiments, the pump light has a λ of ~1475±25nm, thereby providing a broader wavelength range, which allows for delivery of higher pump light, thereby increasing the gain or output power of the ROPA system 100a.

The pump light and the optical transmission signal are combined at the WDM coupler 130a, which is optically coupled to both the HCF 110 and the solid-core optical fiber 120. The optical transmission signal is amplified to an amplified transmission signal by the gain fiber 140, which is optically coupled to the WDM coupler 130a. In other words, for the co-pumping configuration, the WDM coupler 130a is located between the HCF 110 and the gain fiber 140. For embodiments in which the pump light is delivered to the gain medium through the HCF along with the transmission signal, whether co-pumped or counter-pumped, the HCF is located between the gain fiber and the WDM.

For some embodiments, the gain fiber 140 is a rare-earth (RE) doped optical fiber, such as, for example, an Erbium (Er) doped fiber (EDF) with a peak absorption of between approximately 80 decibels-per-kilometer (~80dB/m) and ~150dB/m. To reduce latency, the gain fiber 140 is less than approximately 1.5 meters (~1.5m) in length even though this compromises the efficiency of the amplifier. It is worthwhile to note the art teaches away from decreasing the efficiency of amplifiers, with conventional wisdom teaching that the efficiency of ROPAs should be increased because of the loss of pump power during propagation. Contrary to conventional wisdom, the disclosed embodiments in fact decrease the efficiency of the amplifier (by decreasing the length of the gain fiber), thereby achieving lower latency at the cost of efficiency.

Continuing, the amplified transmission signal emerges from the gain fiber 140 and proceeds through the optical isolator 150 to the output HCF 160. Preferably, the output HCF 160 also exceeds ~4km. Although a length of ~4km is expressly disclosed, it should be appreciated that this length can be higher or lower as a function of signal loss. Thus, for some embodiments, rather than placing a ROPA after ~4km HCF segment, a ROPA can be placed where the signal loss is between ~16dB and ~33dB. Other gain media may be used for operation in the C-band, such as Er or Er/Yb-doped phosphate or multicomponent glass host. It should be appreciated that other bands (such as S-band, O-band, L-band, or even transmission beyond the L-band where HCF may have low loss (such as λ of 2µm)) may be used with their corresponding optical amplifiers. Insofar as the wavelength ranges for C-band, S-band, O-band, L-band, etc., are known to those having skill in the art, further discussion of these particular transmission bands is omitted in this disclosure.

The co-pumping configuration of FIG. 1A provides a lower noise figure (NF) than several alternative configurations.

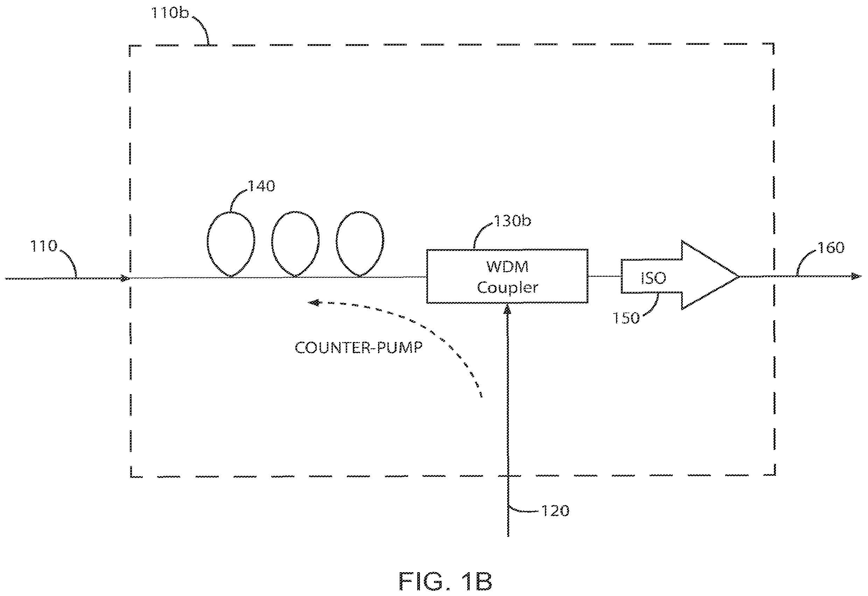

FIG. 1B is a diagram showing one embodiment of a ROPA system 100b for delivering high signal output power and having a counter-pumping configuration. Similar to FIG. 1A, the ROPA system 100b of FIG. 1B comprises an input from a HCF 110, a solid-core optical fiber 120, a WDM coupler 130b. a gain fiber 140, an optical isolator 150, and an output to another HCF 160.

Unlike the embodiment of FIG. 1A, the WDM coupler 130b in the ROPA system 100b of FIG. 1B is located between the gain fiber 140 and the optical isolator 150, thereby resulting in a counter-pumping configuration. Insofar as the individual components of the ROPA system 100b are discussed in detail with reference to FIG. 1A, a redundant discussion of those same components is omitted with reference to FIG. 1B.

It should be appreciated that the counter-pumping configuration of FIG. 1B provides a higher gain and higher output power than several alternative configurations (such as, for example, the co-pumping configuration).

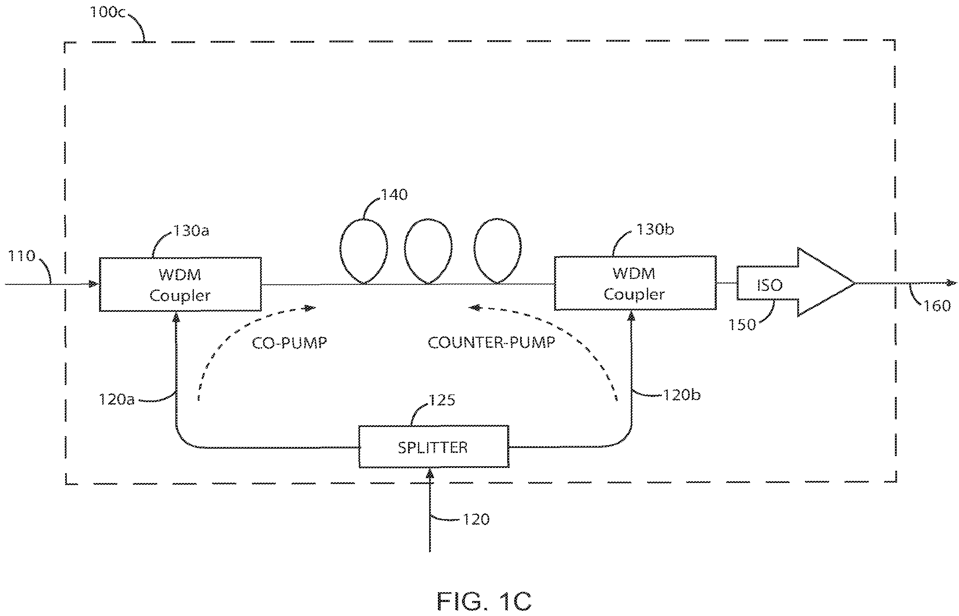

FIG. 1C is a diagram showing one embodiment of a ROPA 100c for delivering high output power and having both a co-pumping and counter-pumping configuration. Similar to FIGS. 1A and 1B, the ROPA system 100b of FIG. 1C comprises an input from a HCF 110, a solid-core optical fiber 120, a gain fiber 140, an optical isolator 150, and an output to another HCF 160.

However, unlike FIGS. 1A or 1B, the ROPA system 100c of FIG. 1C comprises two (2) WDM couplers 130a, 130b, and a pump splitter 125. One WDM coupler 130a is located between the HCF 110 and the gain fiber 140 (for co-pumping the gain fiber 140), while the other WDM coupler 130b is located between the gain fiber 140 and the optical isolator 150 (for counter-pumping the gain fiber 140). In other words, the configuration of FIG. 1C both co-pumps and counter-pumps the gain fiber 140.

Because the pump light is provided to two (2) different WDM couplers 130a, 130b, the solid-core optical fiber 120 from a remote optical pump source (not shown) is split into two (2) different paths by the splitter 125, with one optical pump path being to the first WDM coupler 130a and the another optical pump path being to the second WDM coupler 130b. It should be appreciated that, for some embodiments, the solid-core optical fiber 120 is a standard single-mode fiber that complies with the G.652 Standard (also designated as a G.652-Standards compliant fiber), which is well known to those having skill in the art. For other embodiments, the solid-core optical fiber 120 is a large area ultra-low-loss fiber that is G.654-Standards compliant. Both the G.652-Standards compliant fiber and the G.654-Standards compliant fiber enable more efficient delivery of pump light to the ROPAs.

Because the other components of the ROPA system 100c are discussed above with reference to FIGS. 1A and 1B, a redundant discussion of those same components is omitted with reference to FIG. 1C. Also, because those having skill in the art are familiar with both the G.652 Standard (which is an international standard that describes the geometrical, mechanical, and transmission attributes of a single-mode optical fiber and cable, developed by the Standardization Sector of the International Telecommunication Union (ITU-T) that specifies the single-mode optical fiber (SMF) cable) and the G.654 Standard (which is the international standard for cut-off shifted SMF and cable), further discussion of these and other ITU-T Standards is omitted in this disclosure.

It should be appreciated that having both a co-pumping configuration and a counter-pumping configuration, as shown in FIG. 1C, provides both a low NF (from the co-pumping) and a high gain and high output power (from the counter-pumping).

For any configuration of the ROPA, because it is desirable for the ROPA to reside within the same cable or conduit as the HCF, space is limited and fibers such as the gain fiber and any component pigtails should be capable of bending to small radius without incurring unacceptable attenuation or reduction in reliability.

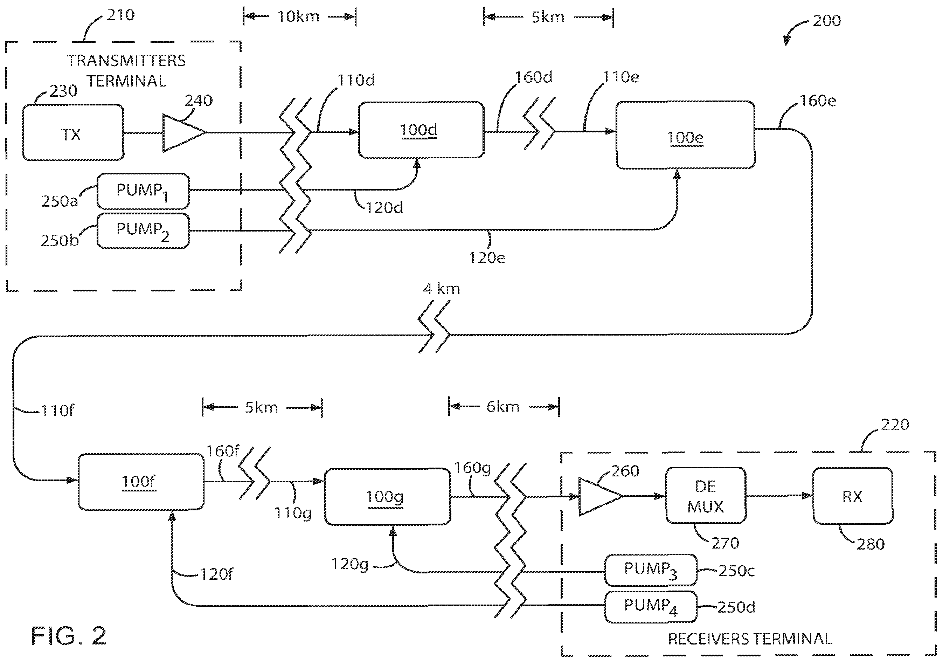

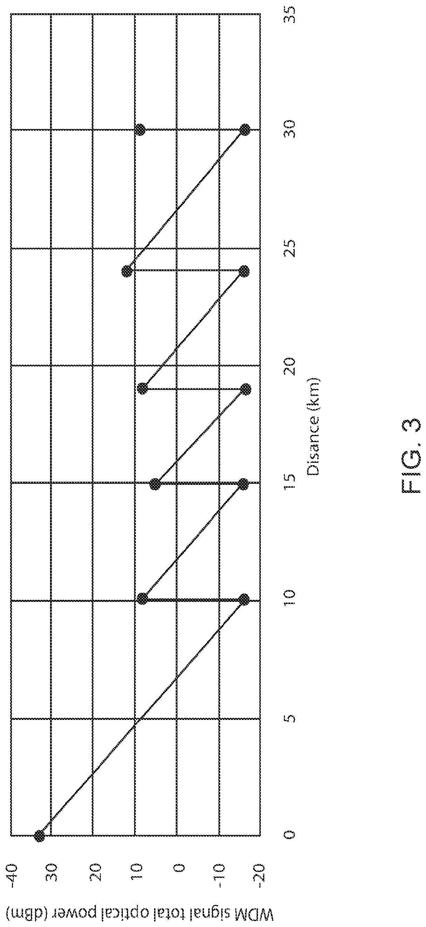

Having described different configurations for ROPA systems 100a, 100b, 100c, attention is turned to FIGS. 2 and 3. Specifically, FIG. 2 shows one embodiment of a long-length, low-latency optical transmission system 200 with multiple ROPAs 100d, 100e, 100f, 100g to amplify optical transmission signals at different segments 110d, 160d/110e, 160e/110f, 160f/110g, 160g between a transmitter terminal 210 and a receiver terminal 220. FIG. 3 shows an example of total optical signal power corresponding to each segment of the transmission system in FIG. 2.

Continuing, in architecture, the optical transmission system 200 comprises a transmitter terminal 210 on one end and a receiver terminal 220 on another end. The transmitter terminal 210 comprises a transmitter 230 (or multiple DWDM transmitter channels), a high-power-low-latency booster amplifier 240, and several remote optical pump sources 250a, 250b. The receiver terminal 220 also comprises remote optical pump sources 250c, 250d. Additionally, the receiver terminal 220 comprises a low-latency receiver pre-amplifier 260, a demultiplexer (or demux) 270 (for demultiplexing the DWDM signals), and a receiver 280 (or multiple DWDM receiver channels). For some embodiments, the pump sources 250a, 250b, 250c, 250d (collectively. 250) are high-power pump lasers that operate at a λ of ~1485nm (± ~5nm). Because fiber gratings add only a small amount of latency to a system, it should be appreciated that a fiber grating-based chromatic dispersion compensator can also be included in the receiver terminal 220 for direct detection using non-return to zero (NRZ) modulation formats. Also, for coherent transmission systems, chromatic dispersion and mode power distribution (MPD) are compensated electronically at the receiver 280. Multi-path interference (MPI) is mitigated, for some embodiments, by digital signal processing (DSP) at the receiver 280.

In the illustrative embodiment of FIG. 2, the optical path between the transmitter terminal 210 and the receiver terminal 220 is approximately thirty kilometers (~30km) and comprises five (5) distinct HCF segments 110d, 160d/110e, 160e/110f, 160f/110g, 160g, and four (4) separate ROPA systems 100d, 100e, 100f, 100g, which connect their respective HCF segments 110d, 160d/110e, 160e/110f, 160f/110g, 160g.

In operation, the DWDM channels from the transmitter 230 are amplified by the high-power-low-latency booster amplifier 240 to be greater than ~30dBm (or greater than ~33dBm) and launched into the HCF 110d. In the embodiment of FIG. 2, the cable having the HCF 110d also comprises the solid-core optical fibers 120d, 120e, thereby providing both the optical transmission signal and the optical pump light through the same cable. For illustrative purposes, the first HCF segment 110d is shown to be ~10km in length, but it should be appreciated that similar principles can be applied to different transmission lengths (e.g., ~4km, ~5km, ~6km, etc.). At the end of the first HCF segment 110d, a first ROPA system 100d receives the optical transmission signal, which has attenuated over the ~10km transmission distance. The attenuation of the optical transmission signal is shown in FIG. 3.

To amplify the optical transmission signal that has attenuated between the transmitter terminal 210 and the first ROPA system 100d, one of the high-power remote optical pump source 250a from the transmitter terminal 210 provides the optical pump light to the first ROPA system 100d through one of the solid core fibers 120d. Preferably, the ROPA system 100d delivers an output power that exceeds ~100 milliwatts (mW) to ~300mW. Because several embodiments of ROPA systems have been described in detail with reference to FIGS. 1A, 1B, and 1C, further discussions of ROPA systems is omitted with reference to FIGS. 2 and 3. The amplification of the optical transmission signal at the ~10km mark is shown in FIG. 3.

The amplified transmission signal continues to propagate from the first ROPA system 100d to the second HCF segment 160d. For illustrative purposes, the second HCF segment 160d/110e is shown to be ~5km in length. At the end of the second HCF segment 110e, a second ROPA system 100e receives the optical transmission signal, which has again attenuated over the ~5km transmission distance. Because the optical transmission signal has traversed a total distance of ~15km, the attenuation at the end of the second HCF segment 160d/110e is shown at the ~15km mark in FIG. 3.

To amplify the optical transmission signal at the second ROPA system 100e, another high-power remote optical pump source 250b from the transmitter terminal 210 provides the optical pump light to the second ROPA system 100e through another solid core fiber 120e. Although a separate remote optical pump source 250b is shown in FIG. 2, it should be appreciated that a single high-power optical pump source can be used with a fraction of the pump light being tapped from the solid-core optical fiber 120 at sequential ROPA systems 100. The optical transmission signal is amplified at the second ROPA system 100e and continues to propagate from the second ROPA system 100e to the third HCF segment 160e, which is shown to be ~4km in length.

At the end of the third HCF segment 110f, a third ROPA system 100f receives the optical transmission signal, which has again attenuated. The attenuation is shown at the ~19km mark in FIG. 3. Because the third ROPA system 100f in this illustrative embodiment is closer to the receiver terminal 220 than it is to the transmitter terminal 210, the third ROPA system 100f is pumped by one of the high-power remote optical pump sources 250d from the receiver terminal 220. In this embodiment, the solid-core optical fiber 120f that carries the optical pump light is cabled together with the HCF 160g from the receiver terminal 220. Similar to the prior two ROPA systems 100d, 100e, the third ROPA system 100f comprises a gain fiber (e.g., an EDF, not shown in FIG. 2) that amplifies the optical transmission signal, as shown in FIG. 3.

The amplified transmission signal continues through a fourth HCF segment 160f/110g to a fourth ROPA system 100g. For illustrative purposes, the fourth HCF segment 160f/110g is shown to be ~5km in length. Because the operation of the fourth ROPA system 100g is substantially similar to the operation of the third ROPA system 100f, further discussion of the fourth ROPA system 100g is omitted here. The attenuation and amplification of the signal at the fourth ROPA system 100g (at the ~24km mark) is shown in FIG. 3. Although separate remote optical pump sources 250c, 250d are shown in FIG. 2, it should be appreciated that a single high-power optical pump source can be used with a fraction of the pump light being tapped from the solid-core optical fiber 120 to provide pump light to the third and fourth ROPA systems 100f, 100g.

From the fourth ROPA system 100g, the optical transmission signal (now amplified again) propagates through a fifth HCF segment 160 (shown to be ~6km in length) to the receiver terminal 220, where it is amplified by the low-latency receiver pre-amplifier 260. Thereafter, the DWDM demultiplexer 270 demultiplexes the DWDM signals and conveys the demultiplexed optical signals to the receiver 280. Again, the attenuation and amplification of the optical transmission signal (at the ~30km mark) is shown in FIG. 3.

As shown in FIGS. 2 and 3, the optical transmission signal is amplified sequentially at various locations along the transmission path by ROPA systems 100d, 100e, 100f, 100g (collectively 100). Because the ROPA systems 100 are pumped remotely, the architecture of FIG. 2 improves OSNR without significantly affecting latency. Furthermore, those having skill in the art will appreciate that the location and gain (or span loss) of each ROPA system 100 can be modified to optimize OSNR at the receiver 280. For example, ROPA systems 100 that are closer to the terminals 210, 220 can be configured for relatively high gain, while ROPA systems 100 that are farther from the terminals 210, 220 can be configured for relatively low gain. This is because the closer ROPA systems 100 will have relatively higher pump power due to their closer proximity to the remote optical pump sources 250, while the farther ROPA systems 100 will have relatively lower pump power because of the longer distances to the remote optical pump sources 250.

Preferably, the lowest power level for each span or segment 110/160 is consistent over the multiple ROPA systems 100, while the highest signal power level for each segment 110/160 is different. This is because HCFs have extremely low nonlinear impact. Also, even though each ROPA system 100 comprises a finite length of gain fiber (e.g., RE-doped fiber, such as EDF), the total length of all gain fibers can be limited to less than ~1m per kilometer of HCF. Thus, in the ~30km example of FIG. 2, the total length of the gain fiber would be less than ~10m across all four (4) ROPA systems 100. Additionally, as noted above, the passive components (e.g., WDM couplers 130, optical isolators 150, etc.) can be integrated into a single sub-system, thereby reducing the total size of the ROPA system 100. Furthermore, a tap can be integrated with the passive components, thereby allowing for monitoring of the optical transmission signal.

Any process descriptions or blocks in flow charts should be understood as being executable out of order from that shown or discussed, including substantially concurrently or in reverse order, depending on the functionality involved, as would be understood by those reasonably skilled in the art of the present disclosure.

Although exemplary embodiments have been shown and described, it will be clear to those of ordinary skill in the art that a number of changes, modifications, or alterations to the disclosure as described may be made. For example, although low-latency ROPAs are shown and described as example embodiments, it should be appreciated by those having skill in the art that higher-latency amplifiers may be used for other embodiments, such as those that have low-latency improvements that are largely attributable to HCFs (rather than low-latency ROPAs). Also, while a single HCF and a single solid-core optical fiber are shown in FIGS. 1A through 3, it should be appreciated that a HCF cable can have multiple HCFs (for delivery of optical transmission signals) and multiple solid-core optical fibers (for delivery of optical pump light). For embodiments with two (2) HCFs, one HCF can be used for signal data, while the other HCF can be used for protection. Alternatively, each HCF can be configured for unidirectional data transfer so that one HCF handles outgoing data transmission while the other HCF handles incoming data transmission. Additionally, the disclosed embodiments can be implemented with any type of gain medium (and not necessarily a gain fiber) that serves as a waveguide, as long as the gain medium has substantially similar transmission characteristics as a gain fiber. For example, the gain medium can be an Er-doped waveguide, instead of an Er-doped fiber.

## Claims

1. An optical fiber signal transmission system comprising:
a first hollow-core fiber, HCF cable comprising:
a first HCF sheathed in the first HCF cable, the first HCF for carrying an optical transmission signal; and
a solid-core optical fiber (120) sheathed together with the first HCF in the first HCF cable, the solid-core optical fiber (120) for carrying pump light from a remote optical pump source;
a remote optically pumped amplifier, ROPA located in the first HCF cable, the ROPA comprising:
an Erbium/Er doped fiber, EDF sheathed together with the first HCF and the solid-core optical fiber (120) in the first HCF cable, the EDF having a length of less than 1.5 meters, the EDF for receiving the optical transmission signal from the first HCF, the EDF further for amplifying the optical transmission signal to an amplified transmission signal;
a wavelength division multiplexing, WDM coupler (130a, 130b) optically coupled to the solid-core optical fiber (120), the WDM coupler (130a, 130b) further being optically coupled to the EDF, the WDM coupler (130a, 130b) for combining the pump light with the optical transmission signal; and
an optical isolator for conveying the amplified transmission signal from the EDF; and
a second HCF cable optically coupled to the ROPA, the second HCF comprising:
a second HCF located in the second HCF cable, the second HCF being optically coupled to the optical isolator, the second HCF for carrying the amplified transmission signal.

2. The system of claim 1, the EDF having a peak absorption of between approximately 80 decibels-per-meter, ~80dB/m to ~150dB/m.

3. The system of claim 1, wherein the WDM coupler (130a, 130b) is located between the first HCF and the EDF, thereby configuring the remote optical pump to co-pump the EDF.

4. The system of claim 1, wherein the WDM coupler is located between the EDF and the optical isolator, thereby configuring the remote optical pump to counter-pump the EDF.

5. The system of claim 1:
wherein the remote optical pump source (250) is a first remote optical pump source;
wherein the pump light is a first pump light;
wherein the solid-core optical fiber (120) is a first solid-core optical fiber;
wherein the WDM coupler (130a, 130b) is a first WDM coupler;
wherein the first WDM coupler is located between the first HCF and the EDF, thereby configuring the first remote optical pump source to co-pump the EDF; and
wherein the system further comprises:
a second remote optical pump source for providing a second pump light;
a second solid-core optical fiber located in the first cable, the second solid-core optical fiber for carrying the second pump light from a second remote optical pump source; and
a second WDM coupler optically coupled between the EDF and the optical isolator, thereby configuring the second remote optical pump source to counter-pump the EDF, the second WDM coupler for combining the second pump light with the transmission signal.

6. The system of claim 1, wherein the ROPA delivers an output signal power of between approximately 100 milliwatts /~100mW and ~300mW.

## Patentansprüche

1. Ein Glasfasersignalübertragungssystem, das folgende Merkmale aufweist:
ein erstes Hohlkernfaser-, HCF-, Kabel, das folgende Merkmale aufweist:
eine erste HCF, die in dem ersten HCF-Kabel ummantelt ist, wobei die erste HCF zum Führen eines optischen Übertragungssignals dient; und
eine optische Festkernfaser (120), die zusammen mit der ersten HCF in dem ersten HCF-Kabel ummantelt ist, wobei die optische Festkernfaser (120) zum Führen von Pumplicht von einer entfernten optischen Pumpquelle dient;
einen entfernten optisch gepumpten Verstärker, ROPA, der in dem ersten HCF-Kabel angeordnet ist, wobei der ROPA folgende Merkmale aufweist:
eine Erbium/Er-dotierte Faser, EDF, die zusammen mit der ersten HCF und der optischen Festkernfaser (120) in dem ersten HCF-Kabel ummantelt ist, wobei die EDF eine Länge von weniger als 1,5 Metern aufweist, wobei die EDF zum Empfangen des optischen Übertragungssignals von der ersten HCF dient, wobei die EDF ferner zum Verstärken des optischen Übertragungssignals zu einem verstärkten Übertragungssignal dient;
einen Wellenlängenmultiplex-, WDM-, Koppler (130a, 130b), der optisch mit der optischen Festkernfaser (120) gekoppelt ist, wobei der WDM-Koppler (130a, 130b) ferner optisch mit der EDF gekoppelt ist, wobei der WDM-Koppler (130a, 130b) zum Kombinieren des Pumplichts mit dem optischen Übertragungssignal dient; und
einen optischen Isolator zum Befördern des verstärkten Übertragungssignals von der EDF; und
ein zweites HCF-Kabel, das optisch mit dem ROPA gekoppelt ist, wobei die zweite HCF folgende Merkmale aufweist:
eine zweite HCF, die in dem zweiten HCF-Kabel angeordnet ist, wobei die zweite HCF optisch mit dem optischen Isolator gekoppelt ist, wobei die zweite HCF zum Führen des verstärkten Übertragungssignals dient.

2. Das System gemäß Anspruch 1, wobei die EDF eine Spitzenabsorption zwischen ungefähr 80 Dezibel pro Meter, ~80 dB/m, bis -150 dB/m aufweist.

3. Das System gemäß Anspruch 1, wobei der WDM-Koppler (130a, 130b) zwischen der ersten HCF und der EDF angeordnet ist, wodurch die entfernte optische Pumpe zum gemeinsamen Pumpen der EDF konfiguriert wird.

4. Das System gemäß Anspruch 1, wobei der WDM-Koppler zwischen der EDF und dem optischen Isolator angeordnet ist, wodurch die entfernte optische Pumpe zum Gegenpumpen der EDF konfiguriert wird.

5. Das System gemäß Anspruch 1:
wobei die entfernte optische Pumpquelle (250) eine erste entfernte optische Pumpquelle ist;
wobei das Pumplicht ein erstes Pumplicht ist;
wobei die optische Festkernfaser (120) eine erste optische Festkernfaser ist;
wobei der WDM-Koppler (130a, 130b) ein erster WDM-Koppler ist;
wobei der erste WDM-Koppler zwischen der ersten HCF und der EDF angeordnet ist, wodurch die erste entfernte optische Pumpquelle zum gemeinsamen Pumpen der EDF konfiguriert wird; und
wobei das System ferner folgende Merkmale aufweist:
eine zweite entfernte optische Pumpquelle zum Bereitstellen eines zweiten Pumplichts;
eine zweite optische Festkernfaser, die in dem ersten Kabel angeordnet ist, wobei die zweite optische Festkernfaser zum Führen des zweiten Pumplichts von einer zweiten entfernten optischen Pumpquelle dient; und
einen zweiten WDM-Koppler, der optisch zwischen der EDF und dem optischen Isolator gekoppelt ist, wodurch die zweite entfernte optische Pumpquelle zum Gegenpumpen der EDF konfiguriert wird, wobei der zweite WDM-Koppler zum Kombinieren des zweiten Pumplichts mit dem Übertragungssignal dient.

6. System nach Patentanspruch 1, wobei die ROPA eine Ausgangssignalleistung von zwischen ungefähr 100 Milliwatt, ~100 mW, und ~300 mW liefert.

## Revendications

1. Système de transmission de signaux par fibre optique comprenant :
un premier câble à fibres à âme creuse, HCF, comprenant :
un premier HCF gainé dans le premier câble HCF, le premier HCF étant destiné à transporter un signal de transmission optique ; et
une fibre optique à âme solide (120) gainée avec le premier HCF dans le premier câble HCF, la fibre optique à âme solide (120) destiné à transporter la lumière de pompage d'une source de pompage optique distante ;
un amplificateur à pompage optique distante, ROPA, situé dans le premier câble HCF, le ROPA comprenant :
une fibre dopée à l'erbium/Er, EDF gainée avec le premier HCF et la fibre optique à âme solide (120) dans le premier câble HCF, l'EDF ayant une longueur inférieure à 1,5 mètre, l'EDF servant à recevoir le signal de transmission optique provenant du premier HCF, l'EDF servant en outre à amplifier le signal de transmission optique en un signal de transmission amplifié ;
un coupleur WDM (130a, 130b) à multiplexage en longueur d'onde, couplé optiquement à la fibre optique à âme solide (120), le coupleur WDM (130a, 130b) étant en outre couplé optiquement à l'EDF, le coupleur WDM (130a, 130b) servant à combiner la lumière de pompage avec le signal de transmission optique ; et
un isolateur optique pour transmettre le signal de transmission amplifié provenant de l'EDF ; et
un deuxième câble HCF couplé optiquement au ROPA, le deuxième HCF comprenant :
un deuxième HCF situé dans le deuxième câble HCF, le deuxième HCF étant couplé optiquement à l'isolateur optique, le deuxième HCF servant à transporter le signal de transmission amplifié.

2. Système selon la revendication 1, l'EDF ayant une absorption maximale comprise entre environ 80 décibels par mètre, ~80 dB/m, et -150 dB/m.

3. Système selon la revendication 1, dans lequel le coupleur WDM (130a, 130b) est situé entre le premier HCF et l'EDF, configurant ainsi la pompe optique distante pour co-pomper l'EDF.

4. Système selon la revendication 1, dans lequel le coupleur WDM est situé entre l'EDF et l'isolateur optique, configurant ainsi la pompe optique distante pour contrepomper l'EDF.

5. Système selon la revendication 1 :
dans lequel la source de pompage optique distante (250) est une première source de pompage optique distante ;
dans lequel la lumière de pompe est une première lumière de pompe ;
dans lequel la fibre optique à âme solide (120) est une première fibre optique à âme solide ;
dans lequel le coupleur WDM (130a, 130b) est un premier coupleur WDM ;
dans lequel le premier coupleur WDM est situé entre le premier HCF et l'EDF, configurant ainsi la première source de pompage optique distante pour co-pomper l'EDF ; et
dans lequel le système comprend en outre :
une deuxième source de pompage optique distante pour fournir une deuxième lumière de pompage ;
une deuxième fibre optique à âme solide située dans le premier câble, la deuxième fibre optique à âme solide servant à transporter la deuxième lumière de pompage provenant d'une deuxième source de pompage optique distante ; et
un deuxième coupleur WDM couplé optiquement entre l'EDF et l'isolateur optique, configurant ainsi la deuxième source de pompage optique distante pour contrepomper l'EDF, le deuxième coupleur WDM servant à combiner la deuxième lumière de pompage avec le signal de transmission.

6. Système selon la revendication 1, dans lequel le ROPA délivre une puissance de signal de sortie comprise entre environ 100 milliwatts, -100 mW, et -300 mW.
